# EUROPEAN PATENT APPLICATION

(11) **EP 2 857 777 A1**
(43) Date of publication of application: **08.04.2015**
(21) Application number: 13797524.9
(22) Date of filing: 23.05.2013
(51) Int. Cl.: F24J 2/54

(54) **SOLAR TRACKER INCLUDING AN AZIMUTH ROTATION MECHANISM**

(30) Priority: 28.05.2012 ES 201230809
(71) Applicant: Abengoa Solar New Technologies, S.A., 41018 Sevilla (ES)
(72) Inventor: CERON GARCIA, Francisco José, E-41014 Sevilla (ES)
(74) Representative: Carvajal y Urquijo, Isabel
(86) International application number: PCT/ES2013/070327
(87) International publication number: WO 2013/178850

(57) **Abstract**

Solar tracker with azimuthal rotation mechanism arranged on the upper extremity of the pedestal (1), comprising a fixed base (10), a hollow bearing cap (3) to support the supporting structure on the fixed base (10), a rotating mechanical element (17) arranged between the bearing cap (3) and the fixed base (10) and two hydraulic cylinders (6, 6'), arranged at different heights in relation to the vertical axis of the bearing cap (3) and, fixed at one end to the bearing cap (3) and at the other end connected by the same fixed axle (7), which is attached to the fixed base (10) in such a way that, when the pistons of the cylinders (6, 6') begin to move, they cause the bearing cap (3) to which the cylinders (6, 6') are attached, to rotate, thereby rotating the cylinders (6, 6') relative to the same axle (7), which is fixed to the base (10).

## Description

### Field of the invention

The present invention falls within the field of solar trackers and more specifically, within the field of T-shaped solar trackers, comprising either a cylindrical or parallelepiped pedestal, to which a supporting structure or structural support is attached by its upper extremity, said supporting structure or structural support being made of mirrors or photovoltaic modules, rotating on two axes, namely azimuthal and lifting axles.

### Background of the invention

Many supporting and rotating mechanisms in supporting structures in solar panels are currently known, understanding by solar panels, both, solar collectors and photovoltaic cells.

These known azimuthal rotation systems are problematic in that, during their daily following of the sun, their initial angular position changes, day after day (in some cases, the difference between the initial position of one day and the next, exceeding 40°). When a large daily angular trajectory (for example 330°) is necessary in order to adopt the initial position the following day, they must be capable of travelling the 330° daily trajectory plus the 40° which separate them from the new initial position, in other words a total of 370°. Nevertheless, when the state of the art trackers surpass a total revolution of 360° and end their travel length at this point, it becomes necessary for them to backtrack, that is to say to rotate in the opposite direction to that of the daily trajectory, in order to position themselves in the new initial position corresponding to the next day. This results in a loss of time, that could be spent reflecting solar rays to the tower and subsequently, in a loss of energy and production time as the solar tracker repositions itself. Furthermore, it creates the risk of the rays moving randomly, thus losing energy and production time since they are not reflected on the tower when the solar tracker is repositioning itself.

Of the azimuthal rotation mechanisms known, US 6,123,067 stands out, disclosing an azimuthal rotation mechanism of solar tracker supporting structures by means of two hydraulic cylinders, which are capable of rotating without the need to backtrack. This mechanism achieves said effect by means of a complex and expensive system, comprising a large scale rotating frame, which rotates around the pedestal, driven by two cylinders, which comprise a first extremity attached to one corner of the frame and a second extremity attached to a rotating axle, the rotating axle of each extremity of each cylinder being different and close, attached to a piece fixed to the pedestal by means of a cylinder, both of which are screwed to the pedestal. This mechanism presents the problem of having large backlashes and runs the risk of the frame rubbing against the pedestal and thus creating friction.

### Description of the invention

The invention refers to a solar tracker comprising either a cylindrical or parallelepiped pedestal, to which a supporting structure or structural support made of mirrors or photovoltaic modules is attached by its upper extremity, with an azimuthal rotating mechanism comprising:
- a fixed base, comprising a supporting plate, attached to a cylindrical piece with a diameter equal to that of the pedestal (upper extremity of the pedestal) by means of supporting ribs and a hollow cylinder, with a diameter equal to or less than that of the pedestal attached onto the supporting plate,
- a preferably cylindrical hollow bearing cap, to which the supporting structure or structural support is attached, arranged on the fixed base in such a way that the hollow cylinder of the fixed base is arranged in the interior of the bearing cap and that comprises:
   ∘ an upper and lower lid with central openings, and
   ∘ a lateral surface, with at least two openings, arranged at different heights,
- a rotating mechanical element, arranged between the bearing cap and the fixed base, comprising an internal hoop attached to the supporting plate and an external rotating hoop attached to the lower lid of the bearing cap,
- a first hydraulic cylinder, arranged so as to cross a first opening on the lateral surface of the bearing cap and that is attached to the bearing cap by means of a clamp, connected to several external extensions above and below the bearing cap,
- a second hydraulic cylinder, arranged so as to cross a second opening on the lateral surface of the bearing cap and that is attached to the bearing cap by means of a clamp, connected to several external extensions above and below the bearing cap,
the ends of the pistons of the first and second cylinders being arranged in the interior of the bearing cap, one on top of the other and connected by the same, fixed rotating axle, perpendicular to the cylinders, attached to the hollow cylinder on the fixed base of the mechanism by a connecting piece, upon which the bearing cap with the supporting structure it supports rotates, driven by the cylinders to which the bearing cap is attached.

The two hydraulic cylinders are at different heights and levels, that is to say, one on top of the other, enabling them to cross whilst preventing them from bumping into one another.

The advantage of this azimuthal rotating mechanism for supporting structures of solar trackers arranged on a pedestal, is that it enables a rotation of 360° or more along one sole axle, without the need to backtrack in order to continue the rotation on the following complete day and without the interposition of any element.

### Brief description of the drawings

Below, a series of drawings which facilitate a better understanding of the invention will be briefly described, these drawings relating specifically to one embodiment of said invention and presented as a non-limiting example thereof.
Figure 1 is a side view of the solar tracker, object of the invention
Figure 2 is a cross section along II-II, as represented in figure 1
Figure 3 represents the bearing cap of the azimuthal rotation mechanism
Figure 4 represents the fixed base of the azimuthal rotation mechanism
Figure 5 represents a detail of the cylinders attached to the hollow cylinder of the fixed base of the mechanism, object of the invention.
Figure 6 is a perspective view of the bearing cap with an exploded representation of the cylinders and the fixed base of the azimuthal rotation mechanism.

In the abovementioned figures, a series of references corresponding to the elements indicated below can be identified, by way of non-limiting example:
1. - pedestal
2. - supporting structure or structural support
3. - bearing cap
4. - upper lid
5. - lower lid
6. - hydraulic cylinder
7. - vertical rotation axle
8. - element attaching the axle to the hollow cylinder
9. - lateral opening of the bearing cap
10. - fixed base
11. - supporting plate
12. - supporting rib
13. - hollow cylinder
14. - clamp
15. - upper attachment extension of the cylinder
16. - lower attachment extension of the cylinder
17. - rotating mechanical element
18. - fixed internal hoop
19. - rotating external hoop
20. - cylindrical piece with a diameter equal to that of the pedestal
21. - join

### Detailed description of one embodiment

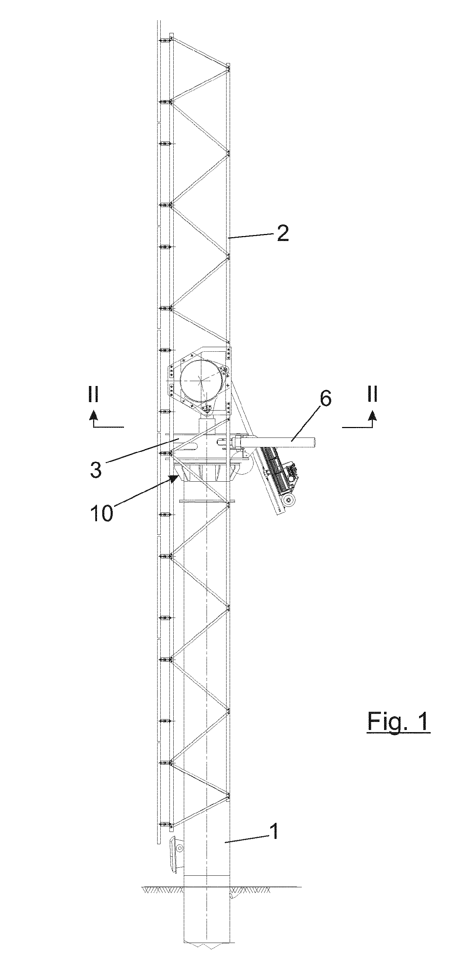

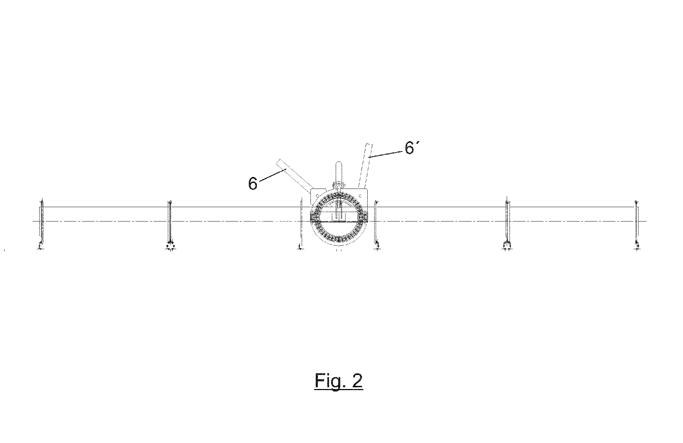

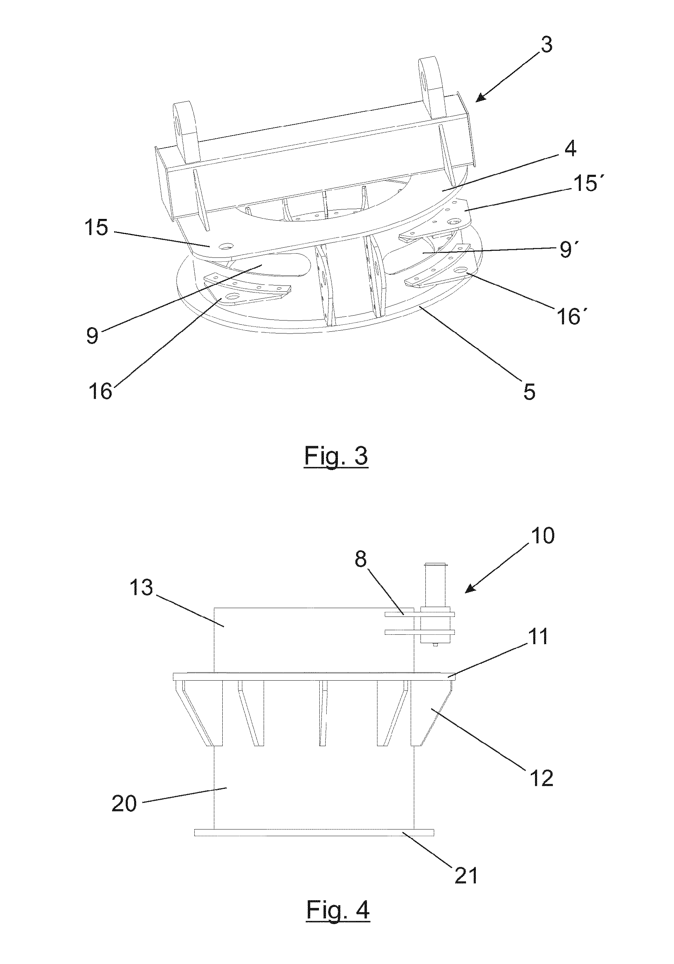

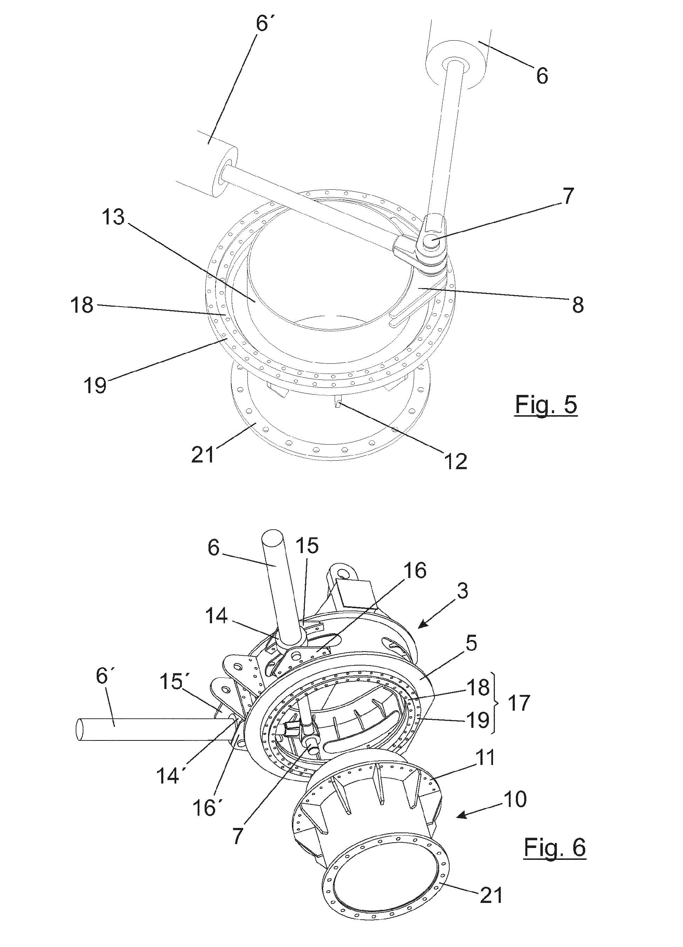

Figure 1 represents a solar tracker, comprising a supporting structure 2 on the pedestal 1, in which an azimuthal rotating mechanism has been arranged, in the upper extremity of the pedestal 1, which, as shown in figures 3-6, comprises:
- a fixed base 10, which, as shown in figure 4, comprises:
   ∘ a cylindrical piece 20 with a diameter equal to that of the pedestal 1, attached by means of a join 21 to the upper extremity of the pedestal 1,
   ∘ a supporting plate 11, attached to the cylindrical piece 20 by means of supporting ribs 12 and
   ∘ a hollow cylinder 13 with a diameter less than or equal to that of the pedestal 1, attached onto the supporting plate 11,
- a hollow bearing cap 3 to which the supporting structure 2 is attached by means of connecting pieces, arranged on the fixed base 10, which, as shown in figure 3, comprises:
   ∘ an upper lid 4 and a lower lid 5 with central openings,
   ∘ a lateral surface comprising at least two lateral openings, the first 9 and second 9' being arranged on the sides of the bearing cap at different heights, and
   ∘ external upper 15, 15' and lower 16, 16' extensions attaching the hydraulic cylinders 6, 6', which may be extensions of the upper or lower lids or extensions of the lateral surface, in this case the upper extension 15 attaching one of the cylinders forming part of the upper lid 4 of the bearing cap 3,
- a rotating mechanical element 17 arranged between the bearing cap 3 and the fixed base 10, comprising a fixed internal hoop 18 attached to the supporting plate 11 and a rotating external hoop 19 attached to the lower lid 5 of the bearing cap 3,
- two hydraulic cylinders 6, 6', as shown in figures 1, 2, 5 and 6, arranged at different heights in relation to the vertical axis of the pedestal and attached at one extremity to the bearing cap 3 by means of the clamps 14, 14' and at the other extremity connected by the same fixed axle 7, attached to the hollow cylinder 13 of the fixed base 10 by means of an connecting element 5, as shown in figure 5.

With this arrangement, when the pistons in the cylinders 6, 6' start to move, they cause the bearing cap 3, to which the supporting structure 2 is attached, to rotate. The cylinders are attached by means of the clamps 14, 14' to the upper extensions 15, 15' and lower extensions 16, 16' of the bearing cap. The cylinders 6, 6' rotate relative to the same axle 7, which in turn is attached to the hollow cylinder 13 of the base 10. In this way, the bearing cap 3 rotates along with the supporting structure 2 in an azimuthal fashion on the fixed pedestal 1.

As already mentioned, the hydraulic cylinders 6, 6' are connected by the extremity corresponding to their piston by means of the same fixed vertical rotating axle 7, perpendicular to the cylinders, attached to the hollow cylinder 13 by means of an attachment element 8. This enables a rotation of more than 360° without any form of impediment, in such a way that the solar tracker does not have to backtrack in order to position itself at the start of each travel length.

The ends of the pistons are arranged one on top of the other, preventing one from impeding the rotational movement of the other, in such a way that each cylinder 6, 6' is at a different height, crossing a first and second opening 9, 9' on the lateral surface of the bearing cap 3.

Each of the cylinders 6, 6' are attached to the bearing cap by means of a clamp 14, 14', in such a way that when the cylinders 6, 6' begin to move, their pistons rotate relative to the fixed rotating vertical axle 7 and cause the bearing cap upon which the supporting structure 2 is secured, to rotate.

This tracking system is specifically designed for its use in solar trackers but the possibility of extending its use to other fields within the industry requiring similar azimuthal tracking is not discarded.

## Claims

1. A solar tracker with azimuthal rotation mechanism of the supporting structure (2), arranged on the upper extremity of the pedestal (1) comprising:
- a hollow bearing cap (3) to which the supporting structure (2) is attached by means of connecting elements comprising:
∘ an upper lid (4) and a lower lid (5) with central openings and,
∘ a lateral surface comprising at least two lateral openings, the first (9) and second (9') arranged on the sides of the bearing cap and,
- two cylinders (6, 6') to drive the azimuthal rotation of the bearing cap (3), **characterised in that** it comprises:
- a fixed base (10) attached to the pedestal (1),
- a rotating mechanical element (1) arranged between the bearing cap (3) and the fixed base (10) and comprising a fixed internal hoop (18) attached to the fixed base (10) and a rotating external hoop (19), attached to the lower lid (5) of the bearing cap (3),
- a first hydraulic cylinder (6) arranged so as to cross a first opening (9) on the lateral surface of the bearing cap (3) and attached to the bearing cap (3) by connecting means,
- a second hydraulic cylinder (6') arranged so as to cross a second opening (9') on the lateral surface of the bearing cap (3) and attached to the bearing cap (3) by connecting means,
the ends of the pistons of the first (6) and second cylinders (6') being arranged inside the bearing cap (3) one on top of the other and connected by the same axle (7), which is attached to the fixed base (10) by means of an attachment element (8), which acts as a rotating axle of the cylinders (6, 6') driving the rotation of the bearing cap (3) relative to the fixed base (10) that is attached to the pedestal (1).

2. A solar tracker according to claim 1, **characterised in that** the fixed base (10) comprises a cylindrical piece (20) with a diameter equal to that of the pedestal (1) attached by means of a join (21) to the upper extremity of the pedestal (1), a supporting plate (11) attached to the cylindrical piece (20) by means of supporting ribs (12) and a hollow cylinder (13), attached onto the supporting plate (11).

3. A solar tracker according to claim 2, **characterised in that** the hollow cylinder (13) is arranged inside the bearing cap (3) and to which the attachment means (8) of the axle (7) connecting the extremities of the pistons of the cylinders (6, 6') are attached.

4. A solar tracker according to the above claims, **characterised in that** the connecting means attaching the cylinders to the bearing cap (3) are a clamp (14, 14') intended for each cylinder, each clamp being connected to upper external extensions (15, 15') and lower extensions (16, 16') of the bearing cap (3), for each cylinder.

5. A solar tracker according to claim 4, **characterised in that** the upper extension (15) of one of the cylinders forms part of the upper lid (4) of the bearing cap (3).

6. A solar tracker according to the above claims, **characterised in that** the rotating mechanical element (17) is a bearing.

7. A solar tracker according to the above claims, **characterised in that** the lateral openings (9, 9') of the bearing cap (3) are at different heights.
